# FASCICULE DE BREVET EUROPEEN

(11) **EP 1 963 587 B1**
(45) Date de publication et mention de la délivrance du brevet: **12.08.2009**
(21) Numéro de dépôt: 06841946.4
(22) Date de dépôt: 15.12.2006
(51) Int. Cl.: E03B 3/36, E03B 3/12

(54) **PROCEDE ET INSTALLATION D'EXPLOITATION DE NAPPE D'EAU SOUTERRAINE**
VERFAHREN UND ANLAGE ZUR NUTZUNG VON GRUNDWASSER
PROCESS AND PLANT FOR MAKING USE OF GROUNDWATER

(30) Priorité: 23.12.2005 FR 0513281
(43) Date de publication de la demande: 03.09.2008
(73) Titulaire: Lyonnaise des Eaux France, 75009 Paris (FR)
(72) Inventeur: HAEFFNER, Hugues, F-92100 Boulogne Billancourt (FR); GRANDGUILLAUME, Jean-Jacques, F-92600 Asnieres (FR)
(74) Mandataire: Michardière, Bernard
(86) Numéro de dépôt international: PCT/FR2006/002743
(87) Numéro de publication internationale: WO 2007/080273

(56) Documents cités:
- FR-A- 750 604
- US-A- 4 576 717
- US-A- 4 755 304
- US-A1- 2005 186 030

## Description

La présente invention est relative à un procédé d'exploitation de nappe d'eau souterraine, captée par forage.

La ressource en eau souterraine bien que globalement de meilleure qualité que les eaux de surface du fait de l'épuration naturelle de certains polluants dans le sous-sol, est aussi plus vulnérable à long terme. Les eaux souterraines assurent plus de 60 % de la production d'eau potable en Europe.

De plus en plus, la qualité de la ressource est fortement dégradée par les pollutions diffuses d'origine agricole ou urbaine. De nouvelles substances indésirables (perturbateurs endocriniens...) sont régulièrement découvertes, signe d'une pression humaine sur la ressource toujours plus forte.

Chaque année durant l'été, de nombreuses restrictions d'usage des ressources sont imposées. Ces difficultés mettent en évidence la fragilité de certaines ressources. Elles sont également génératrices de pertes économiques pour les sociétés distributrices d'eau potable.

La Société déposante a développé une technique de recharge artificielle des nappes qui permet de soutenir le niveau des nappes en y injectant de l'eau de surface prétraitée. Le prétraitement de l'eau de surface avant injection nécessite toutefois des investissements élevés suivant la qualité des eaux de réalimentation utilisées ; il génère en outre des quantités de boues également coûteuses à traiter.

L'évolution des exigences de qualité pour l'eau potable dans un contexte de dégradation de la qualité des ressources, et la mise en place de normes environnementales toujours plus fortes, incluant le traitement des boues d'eau potable, concourent à une augmentation des prix de production de l'eau potable, ceci dans un contexte économique de plus en plus concurrentiel.

Les eaux souterraines présentent des avantages qualitatifs nombreux par rapport à la plupart des eaux de surface mais nécessitent pour leur exploitation une occupation foncière parfois importante. De nombreuses ressources localisées à proximité des lieux de consommation ont été rattrapées par le développement industriel ou urbain de leur environnement. Il se présente maintenant des conflits d'intérêt importants entre la production d'eau potable et les autres acteurs socio-économiques des collectivités sur lesquelles sont implantés les forages.

De plus, la législation sur la protection des eaux souterraines, en France notamment, n'a pas toujours permis d'apporter le degré de protection adéquat de ces ressources.

Face à ces difficultés et afin de pérenniser leur ressource en eau, les exploitants doivent être capables de mettre en oeuvre des mesures opérationnelles pour protéger la, ressource en complément des mesures administratives existantes. Il s'agit d'approches pragmatiques de la protection des ressources qui offrent un compromis acceptable par les différents acteurs locaux.

Les techniques de traitement de l'eau apportent en général une réponse à la dégradation toujours plus importante de la ressource souterraine. Mais elles sont à l'origine de quantités de boues de traitement importantes (provenant des impuretés de l'eau brute et des réactifs utilisés) qu'il faut alors traiter (déshydratation avant mise en décharge ou revalorisation éventuelle) afin de limiter leur impact sur l'environnement.

De plus, le besoin accru de traitements curatifs génère chez les consommateurs un mécontentement vis-à-vis du prix de l'eau et également une méfiance vis-à-vis de la qualité des eaux distribuées dont l'image est à l'opposé de leurs idéaux environnementaux.

US -B- 4 576 717 décrit l'état de la technique le plus proche et propose un procédé et une installation d'exploitation de nappe d'eau souterraine captée par forage, mettant en oeuvre au moins deux niveaux de pompage successifs de l'eau de la nappe avant son utilisation. Selon ce procédé, le système de réalimentation artificielle s'effectue dans des conditions réductrices en faisant percoler l'eau sur un mélange de paille et de sable. Ce système nécessite un apport artificiel et renouvelé du réactif organique constitué par la paille.

L'invention a pour but, surtout, de proposer une solution permettant de diminuer le coût de production de l'eau potable et des investissements nécessaires. L'invention vise aussi à améliorer la qualité des ressources en eaux souterraines, et à pérenniser la protection tout en contrôlant l'impact environnemental et socio-économique de l'activité sur les acteurs locaux.

En particulier, l'invention vise à assurer une production d'eau potable de qualité avec simplification du traitement nécessaire en usine et diminution sensible des boues dues au traitement.

Selon l'invention, le procédé d'exploitation de nappe d'eau souterraine captée par forage, mettant en oeuvre au moins deux niveaux de pompage successifs de l'eau de la nappe avant son utilisation, est caractérisé en ce qu'il comporte un pompage primaire prélevant l'eau de la nappe dans un secteur où la recharge de la nappe est rapide à partir des eaux de surface environnantes, et où elle bénéficie d'une filtration naturelle dans le sous-sol, et d'une épuration naturelle par des conditions réductrices, l'eau issue de ce premier pompage étant envoyée dans un bassin de réalimentation artificielle en contact avec l'air ambiant mais sans réactif organique ou réducteur afin de créer localement des conditions oxydantes, où elle s'infiltre vers la nappe en subissant une deuxième filtration, et un pompage secondaire effectué à proximité du bassin de réalimentation avant son utilisation.

De préférence, le pompage primaire est effectué le long d'un cours d'eau, rivière ou fleuve, ou le long d'une pièce d'eau, lac ou étang, ou d'une sablière. Le pompage primaire peut aussi être effectué dans une pièce d'eau, lac ou étang, ou une sablière interceptant la nappe dans un secteur où sa recharge est rapide.

Le bassin de réalimentation artificielle utilisé pour la filtration en milieu aéré oxydant est généralement une sablière ou une gravière.

L'eau provenant du pompage secondaire peut être soumise à un traitement, assuré par une usine, qui est limité à un affinage et à une désinfection avant distribution de l'eau. L'affinage peut être réalisé sur charbon actif.

Ainsi, selon l'invention, le système de réalimentation artificielle s'effectue en milieu oxydant sans ajout de matière organique et par simple contact avec l'air.

L'invention est également relative à une installation d'exploitation de nappe d'eau souterraine captée par forage, comprenant au moins deux stations de pompages successifs de l'eau de la nappe avant son utilisation, caractérisée en ce qu'elle comporte une station de pompage primaire prélevant l'eau de la nappe dans un secteur où la recharge de la nappe est rapide à partir des eaux de surface environnantes et où elle bénéficie d'une filtration naturelle dans le sous-sol et d'une épuration naturelle par des conditions réductrices ; un bassin de réalimentation artificielle en contact avec l'air ambiant mais sans réactif organique ou réducteur afin de créer localement des conditions oxydantes, dans lequel est envoyée l'eau pompée par la station de pompage primaire ; une station de pompage secondaire pour effectuer un pompage à proximité du bassin de réalimentation ; et une usine pour un traitement simplifié de l'eau.

L'usine de traitement peut comporter uniquement un poste d'affinage et un poste de désinfection. Le poste d'affinage peut être prévu pour un affinage sur charbon actif.

D'autres caractéristiques et avantages de l'invention seront donnés dans les exemples qui suivent, avec référence aux dessins sur lesquels :
Fig. 1 est une vue schématique en coupe d'une installation pour la mise en oeuvre du procédé de traitement de l'eau selon l'invention.
Fig. 2 est une vue similaire à Fig. 1 représentant un exemple de mise en oeuvre du procédé, et
Fig. 3 est une vue similaire à Fig. 2 représentant un autre exemple de mise en oeuvre du procédé.

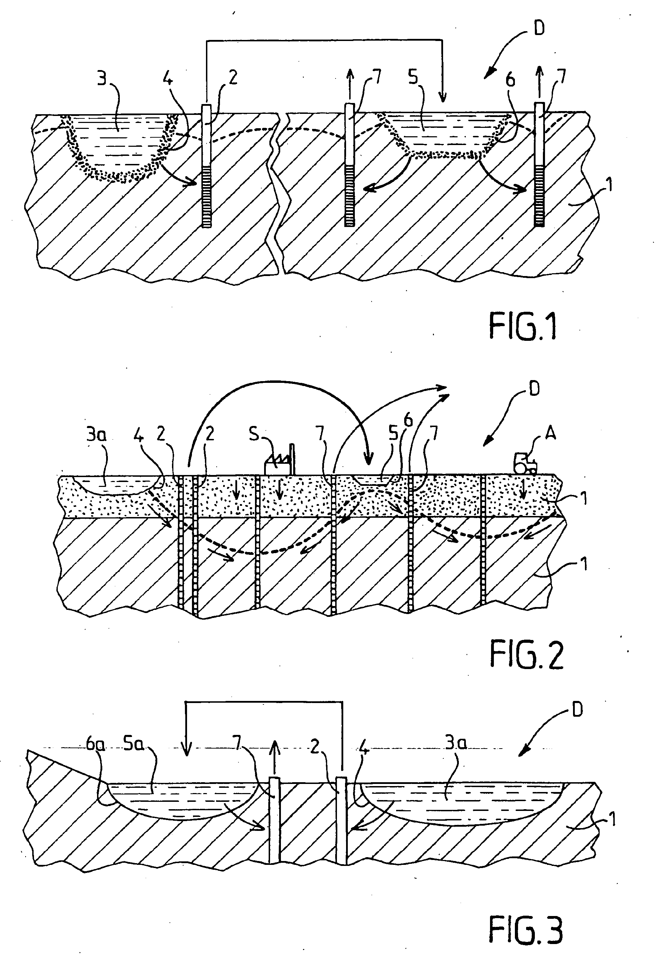

En se référant à Fig. 1, on peut voir une partie d'une installation D mettant en oeuvre le procédé selon l'invention avec deux niveaux de pompage successifs de l'eau de la nappe souterraine avant son envoi vers l'usine de traitement (non représentée).

Cette approche repose sur la connaissance des écoulements souterrains et des mécanismes biochimiques qui ont lieu dans le sous-sol 1, des différents milieux aquatiques (gravières, rivières, bassins d'infiltration) et de la combinaison de leur capacité d'autoépuration. On cherche à utiliser au maximum les capacités naturelles de filtration des aquifères, formations géologiques contenant de façon temporaire ou permanente l'eau mobilisable.

Un premier pompage appelé pompage primaire 2, prélève l'eau de la nappe, à partir d'un forage ou d'une gravière interceptant la nappe, dans un secteur où la recharge de la nappe est rapide, comme par exemple le long d'un cours d'eau 3, rivière ou fleuve, ou d'une nappe d'eau douce, lac ou étang, ou d'une sablière ou gravière ou similaire en lien avec un cours d'eau.

L'eau infiltrée bénéficie d'une filtration naturelle dans le sous-sol 1. Les propriétés réductrices du milieu 4 avoisinant la rivière 3 permettent notamment l'élimination des nitrates. Cette élimination se fait sans utilisation d'un substrat carboné artificiel mais en utilisant et en activant la circulation d'eau dans un milieu 4 riche en matière organique. Les oxydants contenus dans l'eau de surface (dont les nitrates) sont absorbés par les matières organiques naturelles du sol et sous-sol 1.

L'eau issue du pompage primaire 2 est envoyée dans au moins un bassin de réalimentation artificielle 5, en plein air, généralement avec déversoir favorisant l'oxygénation de l'eau. Ces bassins maintenus sans végétaux (qui accumulent les matières organiques) sont largement exempts de stockages de matière organique. A partir de ces bassins, l'eau s'infiltre vers la nappe en subissant une deuxième filtration, cette fois en milieu aéré oxydant 6. Les propriétés oxydantes du milieu 6 permettent notamment l'élimination de l'ammonium, la précipitation du fer et du manganèse en surface, sans toutefois qu'il y ait colmatage de l'aquifère en profondeur.

Un second pompage 7, appelé pompage secondaire et situé à proximité des bassins de réalimentation, alimente l'usine de traitement.

Le procédé de l'invention relève d'une démarche surprenante consistant à pomper l'eau d'une nappe et à ne pas l'utiliser immédiatement pour la consommation, mais à la réinjecter dans le sol pour un nouveau pompage suivi de l'utilisation.

On pourrait, le cas échéant, répéter le cycle et réinjecter l'eau du deuxième pompage dans le sol pour un ou plusieurs cycles d'infiltration et de pompage, afin d'améliorer la qualité de l'eau envoyée à l'usine. La succession des milieux oxydants 4 et réducteurs 6 peut être complétée par exemple en utilisant un milieu qui possède à la fois des zones réductrices et oxydantes, comme par exemple une gravière dont la colonne d'eau est oxydante et les sédiments réducteurs. On réalise alors dans la succession de milieux une élimination complète de l'azote minéral (ammonium et nitrates) et des composés réduits par une séquence nitrification, dénitrification, oxydation.

La configuration de l'invention permet de faire traverser au moins deux milieux naturels différents, dont l'un a des propriétés réductrices et l'autre des propriétés oxydantes. Ces types de milieux sont facilement identifiables et maîtrisables dans l'environnement (berges de rivières, étangs, gravières, bassins d'infiltration). Les composés organiques volatils, , ainsi que la majorité des métaux sont éliminés dans le milieu naturel.

La plupart des composés gênants qui compliquent les chaînes de traitement et génèrent des boues sont évités.

L'usine de traitement effectue un nombre d'opérations limité puisque le procédé de l'invention permet de supprimer, au niveau de l'usine, nombre de traitements complémentaires tels que décantation, filtration, nitrification, déferrisation, démanganisation, lesquels ont eu lieu naturellement.

Tous les prétraitements ou traitements d'eau de surface évités sont autant d'investissements, de réactifs et de sous-produits évités. En particulier, la diminution de la quantité de boues produites a un impact important sur la réduction des coûts. Le procédé s'apparente donc à une véritable usine souterraine du traitement de l'eau.

L'eau qui arrive à l'usine, ayant été naturellement épurée, ne nécessite plus, éventuellement, qu'un affinage sur charbon actif ainsi qu'une désinfection (CAG, et/ou ozone, et/ou chlore) avant sa distribution. Il s'agit d'une eau brute à faible teneur en éléments réduits tels que fer, manganèse ou ammonium, avec une qualité physique élevée, c'est-à-dire comportant peu de matières en suspension, ayant un faible indice de pollution (fouling), et avec peu d'azote minéral (nitrates). Le procédé permet donc une véritable simplification des filières de traitement et la production d'eau potable à bas coûts.

Le matériau filtrant des bassins de réalimentation, généralement du sable ou des graviers, peut se trouver chargé en oxydes de fer et de manganèse après un temps d'utilisation long. Il peut alors être nécessaire de remplacer une couche d'environ 20 cm de sable ou de graviers sur les parois et le fond du bassin. Ce remplacement n'intervient qu'après plusieurs années de fonctionnement, et passage d'un volume important d'eau sur cette couche de sable ou de gravier. Ce remplacement reste beaucoup plus simple et économique qu'une installation de traitement équivalente.

Le procédé permet de créer des capacités de stockage intermédiaires ou de réalimentation de nappe classique. Il permet de bénéficier du pouvoir épurateur du sol.

Le procédé permet de concentrer l'exploitation de l'eau souterraine sur des zones délimitées (autour des systèmes de réalimentation), ce qui permet de simplifier la protection des captages d'eau par la constitution de bassins versants restreints.

Il est possible de prévoir plusieurs cycles de filtration dans le sous-sol suivi d'un pompage afin d'améliorer les caractéristiques de l'eau avant son transfert vers l'usine de traitement.

### Exemple d'application n° 1

On peut voir sur Fig. 2, une représentation du procédé mis en oeuvre le long de la Seine 3a. L'eau est pompée une première fois en bordure de Seine 3a. L'eau ainsi obtenue, à la sortie de forages primaires 2 dans le sous-sol 1 des berges 4, est très différente de la Seine 3a elle-même. Bénéficiant d'une épuration naturelle dans le milieu réducteur 4, elle contient beaucoup moins de nitrates, et très peu de matières solides.

Ensuite l'eau est déplacée par le réseau d'exhaure existant jusqu'aux bassins de réalimentation 5 où elle est stockée quelques jours avant son infiltration dans la nappe. Une deuxième épuration naturelle dans un milieu oxydant 6 va alors transformer l'ammonium et le fer. Il reste à la prélever une deuxième fois à l'aide d'un forage secondaire 7, pour un traitement final en usine, qui sera principalement un affinage sur charbon et une désinfection (ozone et chlore).

Les avantages de la mise en oeuvre du procédé sont nombreux.

On obtient une amélioration significative de la qualité d'eau potable produite par l'usine de traitement, notamment une baisse du taux de nitrates, et une réduction importante, d'environ 75 %, des quantités de boues de traitement produites, avec un coût d'investissement réduit.

La protection des zones de production du champ captant contre les risques de pollutions agricoles A, urbaines et industrielles S est renforcée. La nouvelle configuration du champ captant a permis de confiner les risques de pollution industrielle sur certains forages dédiés à la protection de la nappe qui jouent le rôle de barrière hydraulique.

L'image du champ captant est revalorisée (création de parcs hydrogéologiques, traitement naturel des eaux arrivant à l'usine). Cette solution permet un compromis avec les acteurs locaux qui ne considèrent plus l'activité de l'exploitant comme une menace pour le développement de leurs activités industrielles ou urbaines du fait de la réduction de l'emprise foncière de l'exploitation.

Les investissements sont limités par une réutilisation maximale de l'existant et sont liés principalement à la création de forages secondaires 7 et l'aménagement de nouvelles sablières de réalimentation 5. Ces investissements restent nettement plus modestes que ceux d'un traitement des boues.

### Exemple d'application n° 2

L'approche du procédé selon l'invention, qui optimise le couple Ressource/Traitement, est complètement généralisée.

Toujours en proximité de la Seine, on considère une ressource souterraine dont la qualité est fortement dégradée par l'ammonium. Le procédé selon l'invention va permettre de réhabiliter une telle ressource.

Selon Fig. 3, un pompage primaire 2 est prévu dans le sous-sol 1 en berge 4 de la Seine 3a. L'eau sera ensuite réinjectée par réinfitration sur le site d'une gravière 5a, avec nitrification et dénitrification naturelles. Le pompage secondaire 7 utilisera des forages existants.

Cette solution permettra une économie d'investissement importante par rapport à une solution mettant en oeuvre une nitrification/dénitrification biologique, ou un abandon de la ressource et un achat d'eau hors périmètre.

Cette solution permet de réutiliser la gravière 5a et ses berges 6a qui ne nécessitent pas d'aménagements lourds pour être exploitées. La coexistence d'une colonne d'eau aérobie, et de zones de sédiments organiques réductrices rendent le site adapté tant à la phase d'oxydation permettant d'éliminer le fer, le manganèse et de nitrifier l'ammonium qu'à des réactions de réduction aboutissant à l'élimination des nitrates par dénitrification biologique.

Par rapport à une démarche classique de traitement de l'eau, l'invention apporte une simplification du traitement, avec suppression de certains traitements. Ceci a pour effet la diminution des investissements et la réduction de l'impact sur l'environnement.

Par rapport à une démarche préventive classique, notamment vis-à-vis des nitrates agricoles, le procédé de l'invention permet de stimuler les capacités d'autoépuration existant dans l'environnement. Il ne nécessite donc plus d'action de dépollution à la source, aléatoires et coûteuses.

## Revendications

1. Procédé d'exploitation de nappe d'eau souterraine captée par forage, mettant en oeuvre au moins deux niveaux de pompage successifs de l'eau de la nappe avant son utilisation, **caractérisé en ce qu'**il comporte un pompage primaire (2) prélevant l'eau de la nappe dans un secteur où la recharge de la nappe est rapide à partir des eaux de surface environnantes, et où elle bénéficie d'une filtration naturelle dans le sous-sol, et d'une épuration naturelle par des conditions réductrices, l'eau issue de ce premier pompage étant envoyée dans un bassin de réalimentation artificielle (5) en contact avec l'air ambiant mais sans réactif organique ou réducteur afin de créer localement des conditions oxydantes, où elle s'infiltre vers la nappe en subissant une deuxième filtration, et un pompage secondaire (7) effectué à proximité du bassin de réalimentation avant son utilisation.

2. Procédé selon la revendication 1, **caractérisé en ce que** le pompage primaire (2) est effectué le long d'un cours d'eau (3), rivière ou fleuve.

3. Procédé selon la revendication 1, **caractérisé en ce que** le pompage primaire (2) est effectué le long d'une pièce d'eau, lac ou étang, ou d'une sablière.

4. Procédé selon la revendication 1, **caractérisé en ce que** le pompage primaire (2) est effectué dans une pièce d'eau, lac ou étang, ou une sablière interceptant la nappe dans un secteur où sa recharge est rapide.

5. Procédé selon l'une quelconque des revendications précédentes, **caractérisé en ce que** le bassin de réalimentation artificielle (5,5a) utilisé pour la filtration en milieu aéré oxydant est une sablière ou une gravière.

6. Procédé selon l'une quelconque des revendications précédentes, **caractérisé en ce que** l'eau provenant du pompage secondaire est soumise à un traitement, assuré par une usine, qui est limité à un affinage et à une désinfection avant distribution de l'eau.

7. Procédé selon la revendication 6, **caractérisé en ce que** l'affinage est réalisé sur charbon actif.

8. Installation d'exploitation de nappe d'eau souterraine captée par forage, comprenant au moins deux stations de pompages successifs de l'eau de la nappe avant son utilisation, **caractérisée en ce qu'**elle comporte une station de pompage primaire (2) prélevant l'eau de la nappe dans un secteur où la recharge de la nappe est rapide à partir des eaux de surface environnantes et où elle bénéficie d'une filtration naturelle dans le sous-sol et d'une épuration naturelle par des conditions réductrices ; un bassin de réalimentation artificielle (5,5a) en contact avec l'air ambiant mais sans réactif organique ou réducteur afin de créer localement des conditions oxydantes, dans lequel est envoyée l'eau pompée par la station de pompage primaire (2) ; une station de pompage secondaire (7) pour effectuer un pompage à proximité du bassin de réalimentation ; et une usine pour un traitement simplifié de l'eau.

9. Installation d'exploitation de nappe d'eau souterraine selon la revendication 8, **caractérisée en ce que** l'usine de traitement comporte uniquement un poste d'affinage et un poste de désinfection.

10. Installation d'exploitation de nappe d'eau souterraine selon la revendication 9, **caractérisée en ce que** le poste d'affinage est prévu pour un affinage sur charbon actif.

## Claims

1. Method for making use of groundwater collected by drilling, employing at least two successive levels of pumping the groundwater before its use, **characterised in that** it comprises a primary pumping (2), lifting the groundwater in an area where the refill of the groundwater is rapid from surrounding surface water, and where it benefits from natural filtration in the subsoil and from a natural purification by reducing conditions, the water resulting from this first pumping being directed into an artificial recharge basin (5), which is in contact with the ambient air but without an organic or reducing reagent, in order to locally create oxidising conditions, where it infiltrates toward the groundwater while undergoing a second filtration and a secondary pumping (7) carried out close to the recharge basin before it is used.

2. Method according to claim 1, **characterised in that** the primary pumping (2) is carried out along a water course (3), minor or major river.

3. Method according to claim 1, **characterised in that** the primary pumping (2) is carried out along a stretch of water, lake or pond or a sand quarry.

4. Method according to claim 1, **characterised in that** the primary pumping (2) is carried out in a stretch of water, lake or pond or a sand quarry intercepting the groundwater in an area where its refill is rapid.

5. Method according to any one of the preceding claims, **characterised in that** the artificial recharge basin (5, 5a) used for filtration in an oxidising aerated medium is a sand quarry or gravel pit.

6. Method according to any one of the preceding claims, **characterised in that** the water introduced from the secondary pumping undergoes a treatment carried out by a factory, which is limited to refining and disinfecting before distribution of the water.

7. Method according to claim 6, **characterised in that** the refining is implemented on activated carbon.

8. Installation for making use of groundwater collected by drilling, comprising at least two successive pumping stations for the groundwater before its use, **characterised in that** it comprises a primary pumping station (2), lifting the groundwater in an area where the refill of the groundwater is rapid from surrounding surface water, and where it benefits from natural filtration in the subsoil and from a natural purification by reducing conditions; an artificial recharge basin (5, 5a) in contact with the ambient air but without an organic or reducing reagent to locally create oxidising conditions into which the water pumped by the primary pumping station (2) is directed; a secondary pumping station (7) for carrying out pumping close to the recharge basin; and a factory for simplified treatment of the water.

9. Installation for making use of groundwater according to claim 8, **characterised in that** the treatment factory only comprises a refining station and a disinfecting station.

10. Installation for making use of groundwater according to claim 9, **characterised in that** the refining station is provided for refining on activated carbon.

## Patentansprüche

1. Verfahren zur Nutzung einer durch Bohren erschlossenen Grundwasserschicht, wobei mindestens zwei aufeinanderfolgende Stufen zum Pumpen des Wassers der Schicht vor dessen Verwendung eingesetzt werden, **dadurch gekennzeichnet, dass** es ein erstes Pumpen (2) umfasst, bei dem das Wasser der Schicht aus einem Bereich entnommen wird, in dem die Schicht durch nahe Oberflächengewässer schnell wieder gefüllt wird, und in dem es von der natürlichen Filterung im Untergrund und von einer natürlichen Reinigung durch Reduktionsbedingungen profitiert, wobei das durch das erste Pumpen geförderte Wasser in ein Becken (5) zur künstlichen Wiederauffüllung geleitet wird, das in Kontakt mit der Umgebungsluft steht, jedoch keine organischen Reagenzien oder Reduktionsmittel aufweist, um lokal Oxidationsbedingungen zu erzeugen, und wo das Wasser zu der Schicht hin versickert, wobei es einer zweiten Filterung unterzogen wird, und ein zweites Pumpen (7) vorgesehen ist, das vor dessen Verwendung in der Nähe des Wiederauffüllbeckens durchgeführt wird.

2. Verfahren nach Anspruch 1, **dadurch gekennzeichnet, dass** das erste Pumpen (2) entlang eines Wasserlaufs (3), eines Flusses oder Stroms, erfolgt.

3. Verfahren nach Anspruch 1, **dadurch gekennzeichnet, dass** das erste Pumpen (2) an einem Gartenteich, einem See oder einem Weiher, oder an einer Sandgrube erfolgt.

4. Verfahren nach Anspruch 1, **dadurch gekennzeichnet, dass** das erste Pumpen (2) in einem Gartenteich, See oder Weiher, oder in einer Sandgrube erfolgt, wobei die Schicht in einem Bereich erschlossen wird, in dem sie schnell wieder aufgefüllt wird.

5. Verfahren nach einem der vorhergehenden Ansprüche, **dadurch gekennzeichnet, dass** das Becken (5, 5a) zur künstlichen Wiederauffüllung, das für die Filterung in belüfteter oxidierender Umgebung verwendet wird, eine Sandgrube oder eine Kiesgrube ist.

6. Verfahren nach einem der vorhergehenden Ansprüche, **dadurch gekennzeichnet, dass** das durch das zweite Pumpen gewonnene Wasser durch ein Werk einer Aufbereitung unterzogen wird, die auf eine Affinierung und eine Desinfektion vor der Verteilung des Wassers beschränkt ist.

7. Verfahren nach Anspruch 6, **dadurch gekennzeichnet, dass** die Affinierung mit Aktivkohle erfolgt.

8. Anlage zur Nutzung einer durch Bohren erschlossenen Grundwasserschicht mit mindestens zwei aufeinanderfolgenden Stationen zum Pumpen des Wassers der Schicht vor dessen Verwendung, **dadurch gekennzeichnet, dass** sie aufweist: eine erste Pumpstation (2), welche das Wasser der Schicht aus einem Bereich entnimmt, in dem die Schicht durch nahe Oberflächengewässer schnell wieder gefüllt wird, und in dem es von der natürlichen Filterung im Untergrund und von einer natürlichen Reinigung durch Reduktionsbedingungen profitiert; ein Becken (5, 5a) zur künstlichen Wiederauffüllung, das in Kontakt mit der Umgebungsluft steht, jedoch keine organischen Reagenzien oder Reduktionsmittel aufweist, um lokal Oxidationsbedingungen zu erzeugen, und in welches das von der ersten Pumpstation (2) gepumpte Wasser geleitet wird; eine zweite Pumpstation (7) zum Pumpen in der Nähe des Wiederauffüllbeckens; und ein Werk für eine vereinfachte Aufbereitung des Wassers.

9. Anlage zur Nutzung einer Grundwasserschicht nach Anspruch 8, **dadurch gekennzeichnet, dass** das Aufbereitungswerk ausschließlich eine Affinierungsstation und eine Desinfektionsstation aufweist.

10. Anlage zur Nutzung einer Grundwasserschicht nach Anspruch 9, **dadurch gekennzeichnet, dass** das Aufbereitungswerk für eine Affinierung mit Aktivkohle vorgesehen ist.
